(19) Europäisches Patentamt
European Patent Office
Office européen des brevets

(11) EP 3 871 759 A1

(12) # EUROPEAN PATENT APPLICATION
published in accordance with Art. 153(4) EPC

(43) Date of publication:
**01.09.2021 Bulletin 2021/35**

(21) Application number: **19877302.0**

(22) Date of filing: **25.09.2019**

(51) Int Cl.:
***B01D 71/64*** *(2006.01)* ***B01D 61/36*** *(2006.01)*
***C08G 73/10*** *(2006.01)*

(86) International application number:
**PCT/JP2019/037680**

(87) International publication number:
**WO 2020/084996 (30.04.2020 Gazette 2020/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.10.2018 JP 2018198467**
**26.03.2019 JP 2019058730**

(71) Applicant: **NITTO DENKO CORPORATION**
**Ibaraki-shi**
**Osaka 567-8680 (JP)**

(72) Inventors:
- **ITO Yuri**
  **Ibaraki-shi, Osaka 567-8680 (JP)**
- **SHIMIZU Hisae**
  **Ibaraki-shi, Osaka 567-8680 (JP)**
- **KATAGIRI Makoto**
  **Ibaraki-shi, Osaka 567-8680 (JP)**
- **IHARA Terukazu**
  **Ibaraki-shi, Osaka 567-8680 (JP)**
- **NISHIYAMA Shinya**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **SEPARATION MEMBRANE AND MEMBRANE SEPARATION METHOD**

(57) The present invention provides a separation membrane suitable for separating water from a liquid mixture containing an alcohol and water. A separation membrane 10 according to the present invention contains polyimide including a structural unit represented by formula (1). A is a linking group having a solubility parameter, in accordance with a Fedors method, of more than 5.0. B is a linking group having a solubility parameter of more than 8.56. $R^1$ to $R^6$ each are independently a hydrogen atom, a halogen atom, a hydroxyl group, a sulfonic group, an alkoxy group having 1 to 30 carbon atoms, or a hydrocarbon group having 1 to 30 carbon atoms. $Ar^1$ and $Ar^2$ each are a divalent aromatic group.

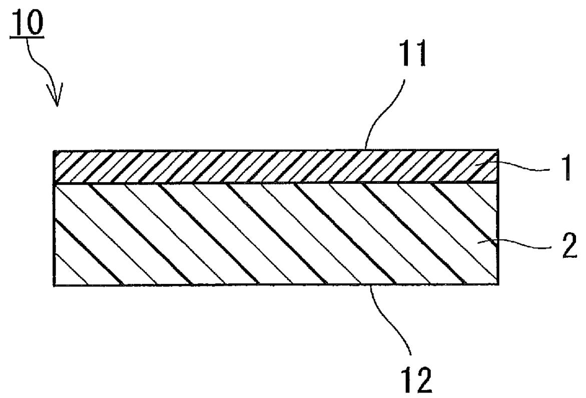


FIG.1

EP 3 871 759 A1

**Description**

TECHNICAL FIELD

The present invention relates to a separation membrane suitable for separating water from a liquid mixture containing an alcohol and water, and a membrane separation method.

BACKGROUND ART

A pervaporation method and a vapor permeation method have been developed as methods for separating water from a liquid mixture containing an alcohol and water. These methods are particularly suitable for separating water from an azeotropic mixture such as a liquid mixture containing ethanol and water. The pervaporation method is also characterized in that it does not require the liquid mixture to be evaporated before being treated.

Examples of a material of a separation membrane used in the pervaporation method include zeolite, polyvinyl alcohol (PVA), and polyimide. Zeolite and PVA have a high hydrophilicity. Thus, when a content of the water in the liquid mixture is high, the separation membrane made of zeolite or PVA swells with the water, lowering the separation performance of the separation membrane in some cases.

In contrast, polyimide is a material that can better suppress the swelling with water than zeolite and PVA. For example, Patent Literature 1 discloses to use an asymmetric membrane made of polyimide as a separation membrane for the pervaporation method.

CITATION LIST

Patent Literature

Patent Literature 1: JP 2013-528118 A

SUMMARY OF INVENTION

Technical Problem

Conventional separation membranes containing polyimide exhibit low separation performance in some cases depending on alcohol concentration. Particularly, conventional separation membranes containing polyimide exhibit insufficient separation performance when used for separating water from a liquid mixture containing an alcohol at a moderate concentration such as 20 wt% to 80 wt%.

The present invention is intended to provide a separation membrane suitable for separating water from a liquid mixture containing an alcohol and water, particularly, a separation membrane suitable for separating water from a liquid mixture containing an alcohol at a moderate concentration.

Solution to Problem

The present invention provides a separation membrane for separating water from a liquid mixture containing an alcohol and water,

the separation membrane containing polyimide, wherein

the polyimide includes a structural unit represented by formula (1) below:

[Chemical Formula 1]

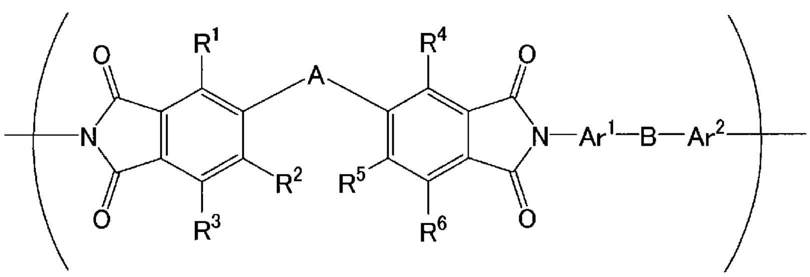

(1)

where A is a linking group having a solubility parameter, in accordance with a Fedors method, of more than 5.0 $(cal/cm^3)^{1/2}$; B is a linking group having a solubility parameter, in accordance with the Fedors method, of more than 8.56 $(cal/cm^3)^{1/2}$; $R^1$ to $R^6$ each are independently a hydrogen atom, a halogen atom, a hydroxyl group, a sulfonic group, an alkoxy group having 1 to 30 carbon atoms, or a hydrocarbon group having 1 to 30 carbon atoms; $Ar^1$ and $Ar^2$ each are a divalent aromatic group; and $Ar^1$ and $Ar^2$ each are represented by formula (2) below when $Ar^1$ and $Ar^2$ each are a phenylene group that may have a substituent;

[Chemical Formula 2]

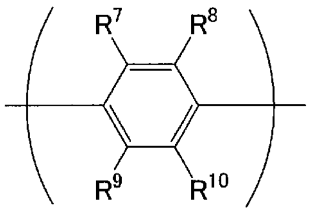

(2)

where $R^7$ to $R^{10}$ each are independently a hydrogen atom, a halogen atom, a hydroxyl group, a sulfonic group, an alkoxy group having 1 to 30 carbon atoms, or a hydrocarbon group having 1 to 30 carbon atoms.

Advantageous Effects of Invention

The present invention can provide a separation membrane suitable for separating water from a liquid mixture containing an alcohol and water, particularly, a separation membrane suitable for separating water from a liquid mixture containing an alcohol at a moderate concentration.

BRIEF DESCRIPTION OF DRAWINGS

FIG. 1 is a cross-sectional view of a separation membrane according to one embodiment of the present invention.
FIG. 2 is a schematic cross-sectional view of a membrane separation device provided with the separation membrane of the present invention.
FIG. 3 is a perspective view illustrating schematically a modification of the membrane separation device provided with the separation membrane of the present invention.

DESCRIPTION OF EMBODIMENTS

According to one embodiment of the present invention, in the formula (1), the number of atoms constituting a bonding chain, among bonding chains that bond two phthalimide structures linked to each other by A, that is composed of a least number of atoms is 2 or more.
According to one embodiment of the present invention, in the formula (1), A includes at least one selected from the group consisting of an ether group and an ester group.
According to one embodiment of the present invention, in the formula (1), B includes an ether group.
According to one embodiment of the present invention, the structural unit is represented by formula (3) below:

[Chemical Formula 3]

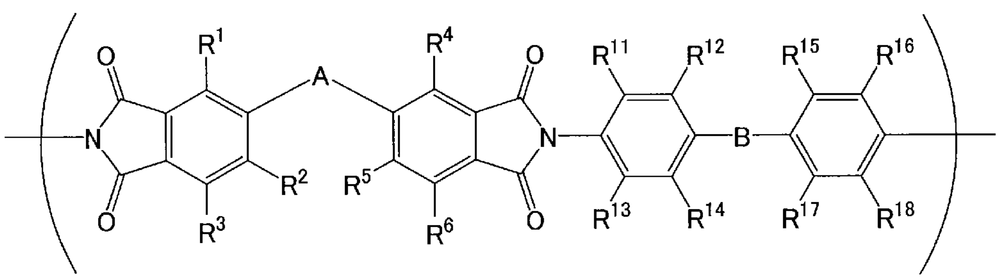

(3)

where A is a linking group having a solubility parameter, in accordance with the Fedors method, of more than 5.0 $(cal/cm^3)^{1/2}$; B is a linking group having a solubility parameter, in accordance with the Fedors method, of more than 8.56 $(cal/cm^3)^{1/2}$; and $R^1$ to $R^6$ and $R^{11}$ to $R^{18}$ each are independently a hydrogen atom, a halogen atom, a hydroxyl group, a sulfonic group, an alkoxy group having 1 to 30 carbon atoms, or a hydrocarbon group having 1 to 30 carbon atoms.

According to one embodiment of the present invention, the separation membrane further includes a hydrophilic porous filler.

According to one embodiment of the present invention, the hydrophilic porous filler includes a metal organic framework.

According to one embodiment of the present invention, the separation membrane has a separation factor $\alpha$ of 20 or more for water with respect to ethanol, in a state in which a liquid mixture composed of ethanol and water is in contact with one surface of the separation membrane, the separation factor $\alpha$ is measured by decompressing a space adjacent to an other surface of the separation membrane, and a concentration of the ethanol in the liquid mixture is 50 vol% when measured with a temperature of the liquid mixture at 20°C, the liquid mixture in contact with the separation membrane has a temperature of 60°C, and the space adjacent to the other surface of the separation membrane is decompressed in such a manner that a pressure in the space is lower than an atmospheric pressure in a measurement environment by 100 kPa.

According to one embodiment of the present invention, the separation membrane includes a separation functional layer containing the polyimide, and the separation functional layer has a thickness of 4 $\mu$m or less.

The present invention further provides a membrane separation method including decompressing, in a state in which a liquid mixture containing an alcohol and water is in contact with one surface of the separation membrane, a space adjacent to an other surface of the separation membrane and thereby obtaining, on a side of the other surface, a permeation fluid having a content of the water higher than a content of the water in the liquid mixture.

According to one embodiment of the present invention, a content of the alcohol in the liquid mixture is in a range of 20 wt% to 80 wt% in the membrane separation method.

According to one embodiment of the present invention, the alcohol is ethanol in the membrane separation method.

Hereinafter, the present invention will be described in detail. The following description is not intended to limit the present invention to a specific embodiment.

(Embodiment of separation membrane)

As shown in FIG. 1, a separation membrane 10 of the present embodiment is provided with a separation functional layer 1. The separation functional layer 1 allows water contained in a liquid mixture to permeate therethrough preferentially or selectively. The separation membrane 10 may be further provided with a porous support member 2 supporting the separation functional layer 1.

The separation functional layer 1 contains polyimide (P). The polyimide (P) includes a structural unit represented by formula (1) below.

[Chemical Formula 4]

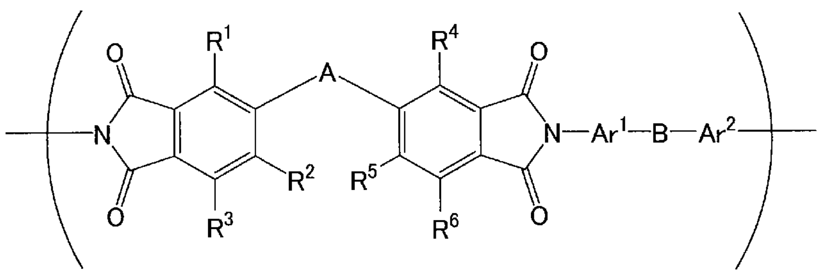

(1)

In the formula (1), A is a linking group having a solubility parameter, in accordance with a Fedors method, of more than 5.0 $(cal/cm^3)^{1/2}$. In the present description, the "solubility parameter in accordance with a Fedors method" is also referred to as an SP value. The "solubility parameter in accordance with a Fedors method" can be calculated by the following formula. It should be noted that in this formula, $\delta$ i is the SP value of an atom or atomic group of an i component. $\Delta$ei is an evaporation energy of the atom or atomic group of the i component. $\Delta$vi is a molar volume of the atom or atomic group of the i component.

$$\delta i[(cal/cm^3)^{1/2}] = (\Delta ei/\Delta vi)^{1/2}$$

The detail of the "solubility parameter in accordance with a Fedors method" is disclosed, for example, in "Polymer Engineering and Science" written by Robert F. Fedors, the year 1974, volume no. 14, the second issue, P. 147-154.

A has an SP value more than 5.0 $(cal/cm^3)^{1/2}$. An SP value of A as high as this makes it easy for water to penetrate into the separation functional layer 1. The SP value of A is preferably 8.5 $(cal/cm^3)^{1/2}$ or more, more preferably 11.0 $(cal/cm^3)^{1/2}$ or more, still more preferably 12.0 $(cal/cm^3)^{1/2}$ or more. The upper limit of the SP value of A is not particularly limited, and it may be 30.0 $(cal/cm^3)^{1/2}$, for example. Preferable examples of the SP value of A include 12.0 $(cal/cm^3)^{1/2}$ and 12.68 $(cal/cm^3)^{1/2}$.

A includes, for example, at least one selected from the group consisting of an oxygen atom, a nitrogen atom, a sulfur atom, and a silicon atom. It is preferable that A include at least one selected from the group consisting of an oxygen atom and a nitrogen atom. It is particularly preferable that A include an oxygen atom. A includes, for example, at least one functional group selected from the group consisting of an ether group, an ester group, a ketone group, a hydroxyl group, an amide group, a thioether group, and a sulfonyl group. Preferably, A includes at least one selected from the group consisting of an ether group and an ester group.

A may include another group, such as a hydrocarbon group, besides the above-mentioned functional groups. The number of carbon atoms that the hydrocarbon group has is not particularly limited, and it is 1 to 15, for example. The number of carbon atoms may be 1 to 3, or may be 6 to 15. The valence of the hydrocarbon group is not particularly limited, either. Preferably, the hydrocarbon group is a divalent hydrocarbon group. Examples of the divalent hydrocarbon group include a methylene group, an ethylene group, a propane-1,3-diyl group, a propane-2,2-diyl group, a butane-1,4-diyl group, a pentane-l,5-diyl group, a 2,2-dimethylpropane-1,3-diyl group, a 1,4-phenylene group, a 2,5-di-tert-butyl-1,4-phenylene group, a 1-methyl-1,1-ethanediylbis(1,4-phenylene) group, and a biphenyl-4,4'-diyl group. Furthermore, at least one hydrogen atom included in these hydrocarbon groups may be substituted by a halogen atom.

A is a linking group represented, for example, by a general formula $-O-R^{19}-O-$ or a general formula $-COO-R^{20}-OOC-$. As stated herein, $R^{19}$ and $R^{20}$ each are a divalent hydrocarbon group having 1 to 15 carbon atoms. As the divalent hydrocarbon group, the divalent hydrocarbon groups stated above can be mentioned.

A may not include the above-mentioned functional groups as long as A is a linking group having an SP value more than 5.0 $(cal/cm^3)^{1/2}$. Examples of such A include an alkylene group. The number of carbon atoms that the alkylene group has is not particularly limited, and it may be 1 to 15, for example, and it may be 1 to 5. The alkylene group may be branched, but preferably it is linear. A part of hydrogen atoms included in the alkylene group may be substituted by a halogen atom. However, it is preferable that the alkylene group be an alkylene group without the substitution, that is, a linear or branched alkylene group.

In the formula (1), the number of atoms constituting a bonding chain, among bonding chains that bond two phthalimide structures linked to each other by A, that is composed of a least number of atoms is 2 or more, for example, and it is preferably 4 or more, and more preferably 6 to 11. In the present description, the bonding chain composed of a least number of atoms is also referred to as a "shortest bonding chain". For example, in the case where A is an o-phenylene group, the number of atoms constituting a shortest bonding chain that bonds two phthalimide structures linked to each other by A is 2. In the case where A is a p-phenylene group, the number of atoms constituting a shortest bonding chain that bonds two phthalimide structures linked to each other by A is 4.

A may be one of the linking groups 1 to 26 shown in Tables 1 and 2 below. Tables 1 and 2 show the chemical structure, the SP value, and the number of atoms constituting a shortest bonding chain of each of the linking groups 1 to 26. A is preferably the linking group 11 or the linking group 18, and particularly preferably the linking group 18. In the case where A is the linking group 11 or the linking group 18, the polyimide (P) is easily dissolved in a polar organic solvent, such as N-methyl-2-pyrrolidone (NMP) and 1,3-dioxolane, and is easily adopted in a method desirable for manufacturing the separation functional layer 1.

[Table 1]

| | -A- | SP value $[(cal/cm^3)^{1/2}]$ | The number of atoms constituting shortest bonding chain |
|---|---|---|---|
| 1 | $-CF_2-$ | 6.66 | 1 |
| 2 | $-CHC(CH_3)_3-$ | 7.52 | 1 |
| 3 | $-CH_2-$ | 8.56 | 1 |
| 4 | $-(CH_2)_5-$ | 8.56 | 5 |
| 5 | $-O-CH_2-C(CH_3)_2-CH_2-O-$ | 8.65 | 5 |

(continued)

| | -A- | SP value [$(cal/cm^3)^{1/2}$] | The number of atoms constituting shortest bonding chain |
|---|---|---|---|
| 6 | $-O-(CH_2)_5-O-$ | 9.23 | 7 |
| 7 | $-O-(CH_2)_4-O-$ | 9.37 | 6 |
| 8 | 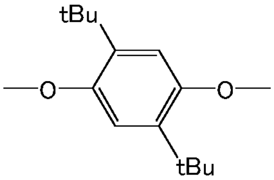 | 9.51 | 6 |
| 9 | 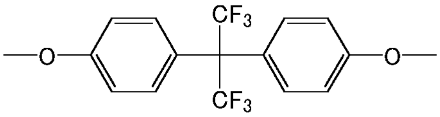 | 9.62 | 11 |
| 10 | $-O-CH_2-O-$ | 10.83 | 3 |
| 11 | 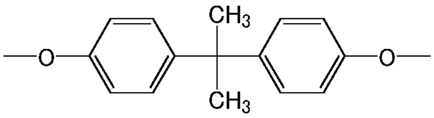 | 11.02 | 11 |
| 12 | 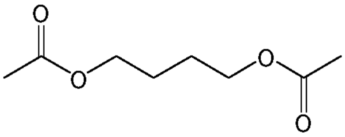 | 11.52 | 8 |
| 13 | 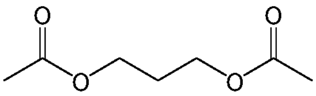 | 12.00 | 7 |
| 14 | 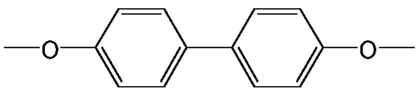 | 12.25 | 10 |
| 15 | 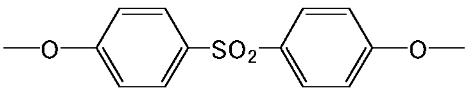 | 12.29 | 11 |

[Table 2]

| | -A- | SP value [$(cal/cm^3)^{1/2}$] | The number of atoms constituting shortest bonding chain |
|---|---|---|---|
| 16 | 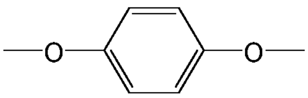 | 12.40 | 6 |
| 17 | $-SO_2-$ | 12.47 | 1 |
| 18 | 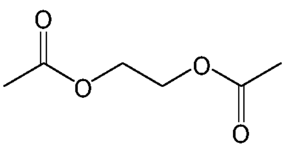 | 12.68 | 6 |

(continued)

| | -A- | SP value [(cal/cm$^3$)$^{1/2}$] | The number of atoms constituting shortest bonding chain |
|---|---|---|---|
| 19 | 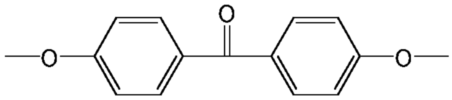 | 13.06 | 11 |
| 20 | 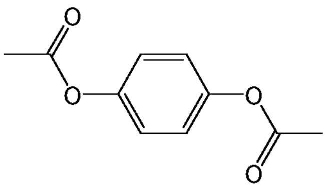 | 13.55 | 8 |
| 21 | -O- | 14.51 | 1 |
| 22 | -S- | 16.79 | 1 |
| 23 | 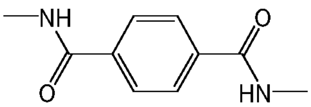 | 18.19 | 8 |
| 24 | -CO- | 19.60 | 1 |
| 25 | 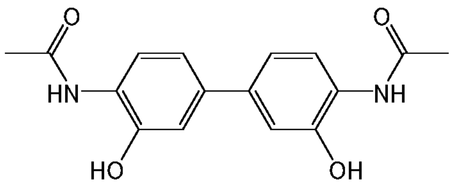 | 20.74 | 12 |
| 26 | -CONH- | 29.02 | 2 |

In the formula (1), B is a linking group having an SP value more than 8.56 (cal/cm$^3$)$^{1/2}$. An SP value of B as high as this makes it easy for water to penetrate into the separation functional layer 1. The SP value of B is preferably 9.0 (cal/cm$^3$)$^{1/2}$ or more, more preferably 11.0 (cal/cm$^3$)$^{1/2}$ or more, still more preferably 12.0 (cal/cm$^3$)$^{1/2}$ or more, and particularly preferably 14.0 (cal/cm$^3$)$^{1/2}$ or more. The upper limit of the SP value of B is not particularly limited, and it may be 30.0 (cal/cm$^3$)$^{1/2}$, for example. Preferable examples of the SP value of B include 14.0(cal/cm$^3$)$^{1/2}$ and 14.51(cal/cm$^3$)$^{1/2}$.

B includes, for example, at least one selected from the group consisting of an oxygen atom, a nitrogen atom, a sulfur atom, and a silicon atom. It is preferable that B include at least one selected from the group consisting of an oxygen atom and a nitrogen atom. It is particularly preferable that B include an oxygen atom. B includes, for example, at least one functional group selected from the group consisting of an ether group, an ester group, a ketone group, a hydroxyl group, an amide group, a thioether group, and a sulfonyl group. Preferably, B includes an ether group.

B may include another group, such as a hydrocarbon group, besides the above-mentioned functional groups. As the hydrocarbon group, the hydrocarbon groups stated above for A can be mentioned. B may be identical to or different from A.

In the formula (1), the number of atoms constituting a bonding chain (a shortest bonding chain), among bonding chains that bond $Ar^1$ and $Ar^2$ linked to each other by B, that is composed of a least number of atoms is 1 or more, for example. The upper limit of the number of atoms constituting the shortest bonding chain is not particularly limited, and it is 12, for example. Preferably, the number of atoms constituting the shortest bonding chain is 1.

B may be one of the linking groups 5 to 26 shown in the above-mentioned Tables 1 and 2. B is preferably the linking group 9, the linking group 16, or the linking group 21, and particularly preferably the linking group 21.

In the formula (1), $R^1$ to $R^6$ each are independently a hydrogen atom, a halogen atom, a hydroxyl group, a sulfonic group, an alkoxy group having 1 to 30 carbon atoms, or a hydrocarbon group having 1 to 30 carbon atoms. Preferably, $R^1$ to $R^6$ each are a hydrogen atom. The alkoxy group or the hydrocarbon group as $R^1$ to $R^6$ may be either linear or branched. The number of carbon atoms that the alkoxy group or the hydrocarbon group has is preferably 1 to 20, more preferably 1 to 10, and particularly preferably 1 to 5. Examples of the alkoxy group include a methoxy group,

an ethoxy group, and a propoxy group. Examples of the hydrocarbon group include a methyl group, an ethyl group, and a propyl group. At least one hydrogen atom included in the alkoxy group or the hydrocarbon group may be substituted by a halogen atom.

$R^2$ and $R^3$ as well as $R^5$ and $R^6$ may be bond to each other to form a ring structure. The ring structure is a benzene ring, for example.

In the formula (1), $Ar^1$ and $Ar^2$ each are a divalent aromatic group. The divalent aromatic group includes an aromatic ring. In the formula (1), it is preferable that a nitrogen atom in a phthalimide structure be bonded directly to the aromatic ring included in $Ar^1$, or the aromatic ring included in $Ar^2$. In the formula (1), B may be bonded directly to both of the aromatic ring included in $Ar^1$ and the aromatic ring included in $Ar^2$.

In $Ar^1$ and $Ar^2$, it is preferable that the aromatic ring be composed of a carbon atom. It should be noted that the aromatic ring may be a heteroaromatic ring including a hetero atom such as an oxygen atom, a nitrogen atom, and a sulfur atom. The aromatic ring may be polycyclic, but preferably it is monocyclic. The number of carbon atoms that the aromatic ring has is not particularly limited, and it may be 4 to 14, for example, and it may be 6 to 10. Examples of the aromatic ring include a benzene ring, a naphthalene ring, an anthracene ring, a phenanthrene ring, a furan ring, a pyrrole ring, a pyridine ring, and a thiophene ring.

In $Ar^1$ and $Ar^2$, the aromatic ring may or may not have a substituent. Examples of the substituent of the aromatic ring include a halogen atom, a hydroxyl group, a sulfonic group, an alkoxy group having 1 to 30 carbon atoms, and a hydrocarbon group having 1 to 30 carbon atoms. As the alkoxy group and the hydrocarbon group, the alkoxy groups and the hydrocarbon groups stated above for $R^1$ to $R^6$ can be mentioned. In the case where the aromatic ring has a plurality of substituents, the substituents may be identical to or different from each other.

Preferably, $Ar^1$ and $Ar^2$ each are a phenylene group that may have a substituent, or a naphthalenediyl group that may have a substituent. It should be noted that $Ar^1$ and $Ar^2$ each are represented by formula (2) below when $Ar^1$ and $Ar^2$ each are a phenylene group that may have a substituent.

[Chemical Formula 5]

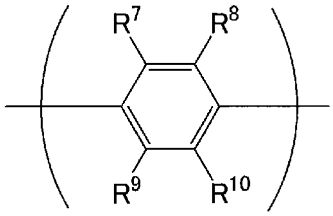

(2)

In the formula (2), $R^7$ to $R^{10}$ each are independently a hydrogen atom, a halogen atom, a hydroxyl group, a sulfonic group, an alkoxy group having 1 to 30 carbon atoms, or a hydrocarbon group having 1 to 30 carbon atoms. As the alkoxy group and the hydrocarbon group, the alkoxy groups and the hydrocarbon groups stated above for $R^1$ to $R^6$ can be mentioned. Preferably, $R^7$ to $R^{10}$ each are a hydrogen atom. The formula (2) represents a p-phenylene structure. Polyimide having the p-phenylene structure is less bulky three-dimensionally than polyimide having an o-phenylene structure or an m-phenylene structure, and is suitable for enhancing the separation performance of the separation membrane.

The naphthalenediyl group, as $Ar^1$ and $Ar^2$, that may have a substituent has a naphthalene-2,6-diyl structure, a naphthalene-1,4-diyl structure, a naphthalene-1,5-diyl structure, or a naphthalene-1,8-diyl structure, for example. The naphthalenediyl group that may have a substituent is a naphthalene-2,6-diyl group, for example.

$Ar^1$ and $Ar^2$ may be identical to or different from each other. For example, there may be a case in which $Ar^1$ is a naphthalene-2,6-diyl group while $Ar^2$ is a p-phenylene group.

In the polyimide (P), the structural unit represented by the formula (1) is preferably a structural unit represented by formula (3) below.

[Chemical Formula 6]

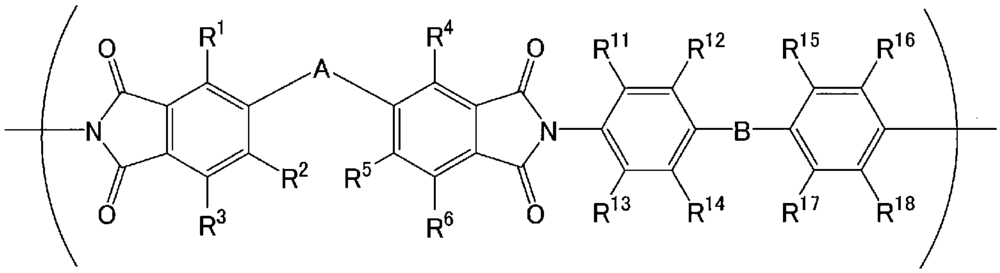

(3)

In the formula (3), A, B, and $R^1$ to $R^6$ are identical to those mentioned above for the formula (1). $R^{11}$ to $R^{18}$ each are independently a hydrogen atom, a halogen atom, a hydroxyl group, a sulfonic group, an alkoxy group having 1 to 30 carbon atoms, and a hydrocarbon group having 1 to 30 carbon atoms. As the alkoxy group and the hydrocarbon group, the alkoxy groups and the hydrocarbon groups stated above for $R^1$ to $R^6$ can be mentioned. $R^{11}$ to $R^{18}$ each are preferably a hydrogen atom.

A content of the structural unit represented by the formula (1) in the polyimide (P) is 50 mol% or more, for example, and it is preferably 60 mol% or more, more preferably 70 mol% or more, still more preferably 80 mol% or more, and particularly preferably 90 mol% or more. The content of the structural unit represented by the formula (1) may be 100 mol%.

The structural unit represented by the formula (1) can be obtained by a reaction between tetracarboxylic dianhydride (C) represented by formula (4) below and a diamine compound (D) represented by formula (5) below. In the formula (4), A as well as $R^1$ to $R^6$ are identical to those in the formula (1). In the formula (5), B, $Ar^1$, and $Ar^2$ are identical to those in the formula (1).

[Chemical Formula 7]

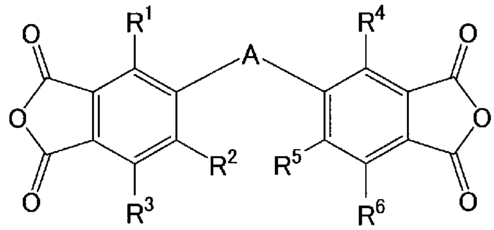

(4)

[Chemical Formula 8]

$$H_2N\text{-}Ar^1\text{-}B\text{-}Ar^2\text{-}NH_2 \qquad (5)$$

The polyimide (P) may include a structural unit derived from an other tetracarboxylic dianhydride that is different from the tetracarboxylic dianhydride (C). The other tetracarboxylic dianhydride is not particularly limited, and a known tetracarboxylic dianhydride can be used. Examples of the other tetracarboxylic dianhydride include pyromellitic dianhydride, and 4,4'-(hexafluoroisopropylidene)diphthalic anhydride.

In the polyimide (P), a ratio P1 of a structural unit(s) derived from the tetracarboxylic dianhydride (C) with respect to structural units derived from all the tetracarboxylic dianhydrides is 50 mol% or more, for example, and it is preferably 70 mol% or more, and more preferably 90 mol% or more. The ratio P1 may be 100 mol%.

The polyimide (P) may include a structural unit derived from an other diamine compound that is different from the diamine compound (D). The other diamine compound is not particularly limited and a known diamine compound can be used. Examples of the other diamine compound include phenylenediamine, diaminobenzoic acid, diaminobiphenyl, and diaminodiphenylmethane. For example, the polyimide (P) may include a structural unit derived from diaminobenzoic acid (such as 3,5-diaminobenzoic acid). The polyimide (P) including the structural unit derived from diaminobenzoic acid is suitable for increasing a flux of the water permeating through the separation membrane 10.

In the polyimide (P), a ratio P2 of a structural unit(s) derived from the diamine compound (D) with respect to structural units derived from all the diamine compounds is 50 mol% or more, for example, and it is preferably 70 mol% or more, and more preferably 90 mol% or more. The ratio P2 may be 100 mol%.

A content of the polyimide (P) in the separation functional layer 1 is 50 wt% or more, for example, and it is preferably 60 wt% or more, more preferably 70 wt% or more, still more preferably 80 wt% or more, and particularly preferably 90 wt% or more. The separation functional layer 1 may be composed substantially of the polyimide (P).

The separation functional layer 1 may include a hydrophilic porous filler besides the polyimide (P). The hydrophilic porous filler is suitable for increasing the flux of the water permeating through the separation membrane 10 without deteriorating considerably the separation performance of the separation membrane 10. The hydrophilic porous filler includes, for example, at least one selected from the group consisting of zeolite and a metal organic framework (MOF). It is preferable that the hydrophilic porous filler include a metal organic framework from the viewpoint of durability against water. Examples of the zeolite include molecular sieves 3A, 4A, 5A, and 13X.

The metal organic framework is also referred to as a porous coordination polymer (PCP). The metal organic framework includes a metal ion and an organic ligand, for example. Examples of the metal ion include a Co ion, an Ni ion, a Zn ion, an Mg ion, a Zr ion, and a Cu ion. The organic ligand may not have a polar group, but preferably it has a polar group. Examples of the polar group include an aldehyde group, an amino group, an amide group, a hydroxyl group, a carboxyl group, and a nitro group. The organic ligand includes an aromatic ring, for example. Examples of the aromatic ring included in the organic ligand include a benzene ring and an imidazole ring. Examples of the organic ligand include 2-hydroxymethylimidazole, 2-formylimidazole, terephthalic acid, 2-hydroxyterephthalic acid, 2,5-dihydroxyterephthalic acid, and 2-aminoterephthalic acid.

Examples of the metal organic framework include ZIF-90, ZIF-91, UiO-66, UiO-66-$NH_2$, UiO-66-OH, UiO-66-$NO_2$, UiO-66-COOH, HKUST-1, and MOF-74 (M = Co, Ni, Zn, Mg, etc.). From the viewpoint of increasing the flux of the water permeating through the separation membrane 10, it is preferable that the metal organic framework include at least one selected from the group consisting of ZIF-90, UiO-66-$NH_2$, UiO-66-OH, UiO-66-$NO_2$, UiO-66-COOH, and MOF-74 (Ni). More preferably, the metal organic framework includes UiO-66-COOH.

As the hydrophilic porous filler, there is suitable a hydrophilic porous filler that can adsorb water, such as the below-mentioned hydrophilic porous filler that has an equilibrium adsorption amount Q2 of 50 $cm^3/g$ or more for water under an equilibrium pressure of 3.2 kPa. In particular, a hydrophilic porous filler that adsorbs water better than it adsorbs ethanol is suitable as the hydrophilic porous filler. A ratio R1 of an equilibrium adsorption amount Q2 that the hydrophilic porous filler has for water under an equilibrium pressure of 3.2 kPa with respect to an equilibrium adsorption amount Q1 that the hydrophilic porous filler has for ethanol under an equilibrium pressure of 7.4 kPa is 2.0 or more, for example, and it is preferably 3.0 or more. The upper limit of the ratio R1 is not particularly limited, and it is 5.0, for example. The ratio R1 is used as an index of hydrophilicity of the porous filler in some cases. In the present description, the term "adsorption amount" means a value obtained by converting a volume of a gas that 1 g of the hydrophilic porous filler has adsorbed into a volume of the gas in a standard state (298 K, 1 atm). The equilibrium adsorption amount Q1 that the hydrophilic porous filler has for ethanol can be determined by the following method. First, the hydrophilic porous filler is pretreated by being heated, for example, at 150°C in a decompressed atmosphere. Next, the hydrophilic porous filler is placed in a vapor adsorption amount measuring apparatus. As the vapor adsorption amount measuring apparatus, BELSORP-maxII available from MicrotracBEL Corp. can be used. Subsequently, gaseous ethanol is introduced into the measuring apparatus at a measurement temperature of 25°C. The gaseous ethanol introduced is adsorbed by the hydrophilic porous filler. The introduction of the gaseous ethanol is carried out in such a manner that a pressure (an equilibrium pressure) of the gaseous ethanol at a time when the adsorption of the ethanol by the hydrophilic porous filler reaches a state of equilibrium is 7.4 kPa. An amount of the ethanol adsorbed by the hydrophilic porous filler when the equilibrium pressure of the gaseous ethanol is 7.4 kPa is determined as the equilibrium adsorption amount Q1. The equilibrium adsorption amount Q2 that the hydrophilic porous filler has for water can be determined by the following method. First, the hydrophilic porous filler pretreated as mentioned above is placed in the vapor adsorption amount measuring apparatus. Subsequently, water vapor is introduced into the measuring apparatus at a measurement temperature of 25°C. The introduction of the water vapor is carried out in such a manner that the equilibrium pressure of the water vapor is 3.2 kPa. An amount of the water adsorbed by the hydrophilic porous filler when the equilibrium pressure of the water vapor is 3.2 kPa is determined as the equilibrium adsorption amount Q2.

The equilibrium adsorption amount Q1 that the hydrophilic porous filler has for ethanol under an equilibrium pressure of 7.4 kPa is 200 $cm^3/g$ or less, for example. The lower limit of the equilibrium adsorption amount Q1 is not particularly limited. It may be 90 $cm^3/g$ or 100 $cm^3/g$. The equilibrium adsorption amount Q2 that the hydrophilic porous filler has for water under an equilibrium pressure of 3.2 kPa is 300 $cm^3/g$ or more, for example, and it may be 350 $cm^3/g$ or more, 450 $cm^3/g$ or more, 500 $cm^3/g$ or more, or 550 $cm^3/g$ or more in some cases. The upper limit of the equilibrium adsorption amount Q2 is not particularly limited, and it is 800 $cm^3/g$, for example.

The hydrophilic porous filler may be a hydrophilic porous filler in which a ratio R2 of a BET (Brunauer-Emmett-Teller) specific surface area S2 obtained by water vapor adsorption with respect to a BET specific surface area S1 obtained by nitrogen gas adsorption is 0.005 or more. The ratio R2 is used as an index of hydrophilicity of the porous filler in some cases. In the hydrophilic porous filler, the ratio R2 is 0.01 or more, for example, and it is preferably 0.1 or more, more preferably 0.2 or more, and still more preferably 0.3 or more. The ratio R2 may be 25 or less, 10 or less,

1.0 or less, or 0.6 or less.

In the hydrophilic porous filler, the BET specific surface area S1 obtained by nitrogen gas adsorption is 1500 $m^2$/g or less, for example, and it is preferably 1000 $m^2$/g or less. It may be 900 $m^2$/g or less in some cases. The specific surface area S1 may be 30 $m^2$/g or more, or 400 $m^2$/g or more. In the hydrophilic porous filler, the BET specific surface area S2 obtained by water vapor adsorption is 10 $m^2$/g or more, for example, and it is preferably 100 $m^2$/g or more, and more preferably 150 $m^2$/g or more. It may be 200 $m^2$/g or more in some cases. The specific surface area S2 may be 1000 $m^2$/g or less, 600 $m^2$/g or less, or 400 $m^2$/g or less.

A content of the hydrophilic porous filler in the separation functional layer 1 may be 1 wt% or more, 5 wt% or more, 10 wt% or more, 15 wt% or more, or 20 wt% or more, for example. The content of the hydrophilic porous filler in the separation functional layer 1 may be 30 wt% or less. The separation functional layer 1 may not include the hydrophilic porous filler, particularly the metal organic framework.

The separation functional layer 1 has a thickness that is not particularly limited. It is 4 μm or less, for example, and it is preferably 2 μm or less, and more preferably 1.5 μm or less. The thickness of the separation functional layer 1 may be 0.05 μm or more, or 0.1 μm or more.

The porous support member 2 is not particularly limited as long as it can support the separation functional layer 1. Examples of the porous support member 2 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polycarbonate, polysulfone, polyether ether ketone, polyacrylonitrile, polyimide, and polyphenylene oxide; a metallic foam having an open cell or a closed cell; a polymer foam having an open cell or a closed cell; silica; porous glass; and a mesh screen. The porous support member 2 may be a combination of two or more of these materials.

The porous support member 2 has an average pore diameter of 0.01 to 0.4 μm, for example. The porous support member 2 has a thickness that is not particularly limited. It is 10 μm or more, for example, and it is preferably 20 μm or more, and more preferably 50 μm or more. The thickness of the porous support member 2 is 300 μm or less, for example, and it is preferably 200 μm or less, and more preferably 75 μm or less.

The separation membrane 10 can be produced by forming the separation functional layer 1 on the porous support member 2. The separation functional layer 1 can be produced by the following method, for example. First, the diamine compound (D) is dissolved in a solvent to obtain a solution. Examples of the solvent include a polar organic solvent such as N-methyl-2-pyrrolidone and 1,3-dioxolane.

Next, the tetracarboxylic dianhydride (C) is added gradually to the obtained solution. This makes the tetracarboxylic dianhydride (C) and the diamine compound (D) react with each other to form polyamide acid. The addition of the tetracarboxylic dianhydride (C) is carried out under the conditions, for example, that the solution is being stirred for 3 to 20 hours at a temperature equal to or lower than a room temperature (25°C).

Subsequently, the polyamide acid is imidized to obtain the polyimide (P). Examples of the imidization method include a chemical imidization method and a thermal imidization method. The chemical imidization method is a method for imidizing polyamide acid under a room temperature condition, for example, using a dehydration condensation agent. Examples of the dehydration condensation agent include acetic anhydride, pyridine, and triethylamine. The thermal imidization method is a method for imidizing polyamide acid by a heat treatment. The heat treatment is carried out at a temperature of 180°C or higher, for example.

Thereafter, the dispersion (or solution) containing the polyimide (P) is applied onto the porous support member 2 to obtain a coating. The coating is dried to obtain the separation functional layer 1. Thereby, the separation membrane 10 can be produced.

The method for forming the separation functional layer 1 is not limited to the above-mentioned method. The separation functional layer 1 may be formed, for example, by imidizing the polyamide acid after applying the dispersion (or solution) containing the polyamide acid onto the porous support member 2.

The separation membrane 10 of the present embodiment is suitable for separating water from a liquid mixture containing an alcohol and water. For example, a separation factor α that the separation membrane 10 has for water with respect to ethanol is 20 or more, for example, and it is preferably 30 or more, more preferably 40 or more, still more preferably 100 or more, and particularly preferably 150 or more. The upper limit of the separation factor α is not particularly limited, and it is 1000, for example. The separation factor α (α/thickness) standardized by the thickness of the separation functional layer 1 is 10 $\mu m^{-1}$ or more, for example, and it is preferably 20 $\mu m^{-1}$ or more, more preferably 40 $\mu m^{-1}$ or more, still more preferably 100 $\mu m^{-1}$ or more, and particularly preferably 140 $\mu m^{-1}$ or more. The upper limit of the value α/thickness is not particularly limited, and it is 500 $\mu m^{-1}$, for example.

The separation factor α can be measured by the following method. First, in a state in which a liquid mixture composed of ethanol and water is in contact with one surface (a principal surface 11, on a side of the separation functional layer, of the separation membrane 10, for example) of the separation membrane 10, a space adjacent to an other surface (a principal surface 12, on a side of the porous support member, of the separation membrane 10, for example) of the

separation membrane 10 is decompressed. Thereby, a permeation fluid that has permeated through the separation membrane 10 can be obtained. A volume ratio of the water and a volume ratio of the ethanol in the permeation fluid are measured. In the above-mentioned procedure, a concentration of the ethanol in the liquid mixture is 50 vol% (44 wt%) when measured with a temperature of the liquid mixture at 20°C. The liquid mixture in contact with the separation membrane 10 has a temperature of 60°C. The space adjacent to the other surface of the separation membrane 10 is decompressed in such a manner that a pressure in the space is lower than an atmospheric pressure in a measurement environment by 100 kPa. The separation factor $\alpha$ can be calculated by the following formula. It should be noted that in the following formula, $X_A$ and $X_B$ are respectively a volume ratio of the water and a volume ratio of the alcohol in the liquid mixture. $Y_A$ and $Y_B$ are respectively the volume ratio of the water and the volume ratio of the alcohol in the permeation fluid that has permeated through the separation membrane 10.

$$\text{Separation factor } \alpha = (Y_A/Y_B)/(X_A/X_B)$$

In the above-mentioned conditions for measuring the separation factor $\alpha$, the flux of the water permeating through the separation membrane 10 is 0.05 (kg/m$^2$/hr) or more, for example, and it is preferably 0.10 (kg/m$^2$/hr) or more, more preferably 0.15 (kg/m$^2$/hr) or more, still more preferably 0.20 (kg/m$^2$/hr) or more, particularly preferably 0.30 (kg/m$^2$/hr) or more, and especially preferably 0.40 (kg/m$^2$/hr) or more. The upper limit of the flux of the water permeating through the separation membrane 10 is not particularly limited, and it is 1.0 (kg/m$^2$/hr), for example.

The separation membrane 10 of the present embodiment has an excellent separation factor $\alpha$. This characteristic is obtained by adjusting properly the SP value of the linking group A and the SP value of the linking group B in the structural unit represented by the formula (1). That is, water can penetrate into the separation functional layer 1 easily when the SP value of the linking group A is more than 5.0 (cal/cm$^3$)$^{1/2}$ as well as the SP value of the linking group B is more than 8.56 (cal/cm$^3$)$^{1/2}$. This makes it possible to sufficiently separate water from the liquid mixture even in the case where a content of the water in the liquid mixture is relatively high, that is, a concentration of the alcohol in the liquid mixture is moderate.

The SP value is usually used to estimate the meltability of polymer in a specific solvent. According to the studies by the present inventors, the SP value is also useful as an index for selecting an appropriate linking group to achieve an excellent separation factor $\alpha$ with the polyimide represented by the above-mentioned formula (1).

(Embodiment of membrane separation device)

As shown in FIG. 2, a membrane separation device 100 of the present embodiment is provided with the separation membrane 10 and a tank 20. The tank 20 is provided with a first room 21 and a second room 22. The separation membrane 10 is disposed in the tank 20. In the tank 20, the separation membrane 10 separates the first room 21 from the second room 22. The tank 20 has a pair of wall surfaces, and the separation membrane 10 extends from one of them to the other.

The first room 21 has an inlet 21a and an outlet 21b. The second room 22 has an outlet 22a. The inlet 21a, the outlet 21b, and the outlet 22a each are an opening formed in the wall surfaces of the tank 20, for example.

Membrane separation using the membrane separation device 100 is carried out by the following method, for example. First, a liquid mixture 30 containing an alcohol and water is supplied into the first room 21 via the inlet 21a. This makes it possible to bring the liquid mixture 30 into contact with one surface of the separation membrane 10. The alcohol contained in the liquid mixture 30 is, for example, a lower alcohol that exhibits azeotropy with water. Preferably, the alcohol is ethanol. The alcohol may be isopropyl alcohol (IPA). A concentration of the alcohol in the liquid mixture 30 is 10 wt%, for example, and it is preferably 20 wt% or more. The separation membrane 10 is particularly suitable for separating the water from the liquid mixture 30 containing the alcohol at a moderate concentration (20 wt% to 80 wt%, particularly 30 wt% to 70wt%). It should be noted that the concentration of the alcohol in the liquid mixture 30 may be 80 wt% or more. The liquid mixture 30 may be composed substantially of the alcohol and water. A temperature of the liquid mixture 30 may be higher than a boiling point of the alcohol to be used. Preferably, the temperature is lower than the boiling point of the alcohol. The temperature of the liquid mixture 30 is 25°C or higher, for example, and it is preferably 40°C or higher, and more preferably 60°C or higher. The temperature of the liquid mixture 30 may be 75°C or lower.

Next, in a state in which the liquid mixture 30 is in contact with one surface of the separation membrane 10, a space adjacent to an other surface of the separation membrane 10 is decompressed. To be specific, an inside of the second room 22 is decompressed via the outlet 22a. The membrane separation device 100 may be further provided with a pump (not shown) for decompressing the inside of the second room 22. The second room 22 is decompressed in such a manner that a space in the second room 22 has a pressure lower than an atmospheric pressure in a measurement environment by 10 kPa or more, for example, and preferably by 50 kPa or more, and more preferably by 100 kPa or more.

Decompressing the inside of the second room 22 makes it possible to obtain, on a side of the other surface of

the separation membrane 10, a permeation fluid 35 having a content of the water higher than a content of the water in the liquid mixture 30. That is, the permeation fluid 35 is supplied into the second room 22. The permeation fluid 35 contains the water as a main component, for example. The permeation fluid 35 may contain a small amount of the alcohol besides the water. The permeation fluid 35 may be a gas or a liquid. The permeation fluid 35 is discharged to an outside of the tank 20 via the outlet 22a.

The concentration of the alcohol in the liquid mixture 30 increases gradually from the inlet 21a toward the outlet 21b of the first room 21. The liquid mixture 30 (a concentrated fluid 36) processed in the first room 21 is discharged to the outside of the tank 20 via the outlet 21b.

The membrane separation device 100 of the present embodiment is used preferably for a pervaporation method. The membrane separation device 100 may be used for other membrane separation methods such as a vapor permeation method. That is, a mixture gas containing a gaseous alcohol and gaseous water may be used instead of the liquid mixture 30 in the membrane separation method mentioned above. The membrane separation device 100 of the present embodiment is suitable for a flow-type (continuous-type) membrane separation method. The membrane separation device 100 of the present embodiment may be used for a batch-type membrane separation method.

(Modification of membrane separation device)

As shown in FIG. 3, a membrane separation device 110 of the present embodiment is provided with a central tube 41 and a laminate 42. The laminate 42 includes the separation membrane 10. The membrane separation device 110 is a spiral membrane element.

The central tube 41 has a cylindrical shape. The central tube 41 has a surface with a plurality of pores formed therein to allow the permeation fluid 35 to flow into the central tube 41. Examples of a material of the central tube 41 include: a resin such as an acrylonitrile-butadiene-styrene copolymer (an ABS resin), a polyphenylene ether resin (a PPE resin), and a polysulfone resin (a PSF resin); and a metal such as stainless steel and titanium. The central tube 41 has an inner diameter in a range of 20 to 100 mm, for example.

The laminate 42 further includes a supply-side flow passage material 43 and a permeation-side flow passage material 44 besides the separation membrane 10. The laminate 42 is wound around a circumference of the central tube 41. The membrane separation device 110 may be further provided with an exterior material (not shown).

As the supply-side flow passage material 43 and the permeation-side flow passage material 44, a resin net composed of polyphenylene sulfide (PPS) or an ethylene-chlorotrifluoroethylene copolymer (ECTFE) can be used, for example.

Membrane separation using the membrane separation device 110 is carried out by the following method, for example. First, the liquid mixture 30 is supplied into an end of the wound laminate 42. An inner space of the central tube 41 is decompressed. Thereby, the permeation fluid 35 that has permeated through the separation membrane 10 of the laminate 42 moves into the central tube 41. The permeation fluid 35 is discharged to an outside via the central tube 41. The liquid mixture 30 (the concentrated fluid 36) processed by the membrane separation device 110 is discharged to the outside from an other end of the wound laminate 42. Thereby, the water can be separated from the liquid mixture 30.

EXAMPLES

Hereinafter, the present invention will be described in detail by way of examples and comparative examples. It should be noted that the present invention is not limited to these examples.

(Example 1)

First, as tetracarboxylic dianhydride, bis(1,3-dioxo-1,3-dihydroisobenzofuran-5-carboxylic acid) ethylene (a compound represented by the formula (4) where A was the linking group 18 as well as $R^1$ to $R^6$ each were a hydrogen atom) was prepared. As a diamine compound, 4,4'-diaminodiphenyl ether (a compound represented by the formula (5) where B was the linking group 21 as well as $Ar^1$ and $Ar^2$ each were a p-phenylene group) was prepared. Next, the diamine compound was dissolved in N-methyl-2-pyrrolidone to obtain a solution. The tetracarboxylic dianhydride was added to the obtained solution under a room temperature condition to obtain polyamide acid. Next, the polyamide acid was chemically imidized using triethylamine and acetic anhydride to obtain polyimide. The chemical imidization was carried out in N-methyl-2-pyrrolidone under a temperature condition of 60°C.

Next, the polyimide was dissolved in 1,3-dioxolane. The obtained solution was applied onto a porous support member to obtain a coating. As the porous support member, a UF membrane (ultrafiltration membrane) RS-50 (a laminate of a PVDF porous layer and a PET nonwoven fabric) available from Nitto Denko Corporation was used. The coating was formed on the PVDF porous layer of the RS-50. Next, the coating was dried to form a separation functional layer. The separation functional layer had a thickness of 1.28 μm. The separation functional layer had a principal surface with

an area of 33.16 $cm^2$. Thereby, a separation membrane of Example 1 was obtained.

Next, the separation factor $\alpha$ of the separation membrane of Example 1 and the flux of the water that has permeated through the separation membrane were measured by the following method. First, the separation membrane of Example 1 was placed in a metal cell, and the metal cell was sealed with an O-ring so that no leakage occurred. Next, 250 mL of a liquid mixture was injected into the metal cell in such a manner that the liquid mixture was in contact with a principal surface, on a side of the separation functional layer, of the separation membrane. The liquid mixture was composed substantially of ethanol and water. A concentration of the ethanol in the liquid mixture was 50 vol% when measured with a temperature of the liquid mixture at 20°C. Next, the metal cell was heated to 60°C in a water bath. The temperature of the liquid mixture in the metal cell was confirmed to be 60°C, and then a space, in the metal cell, that is adjacent to a principal surface, on a side of the porous support member, of the separation membrane was decompressed. This space was decompressed in such a manner that a pressure in the space was lower than an atmospheric pressure in a measurement environment by 100 kPa. Thereby, a gaseous permeation fluid was obtained. The gaseous permeation fluid was cooled using -196°C liquid nitrogen to liquefy the permeation fluid. A composition of the liquid permeation fluid was analyzed by gas chromatography. The separation factor $\alpha$ of the separation membrane and the flux of the water that had permeated through the separation membrane were calculated based on the composition of the permeation fluid, a weight of the permeation fluid, etc. Table 3 shows the results.

(Example 2)

A separation membrane of Example 2 was fabricated in the same manner as in Example 1, except that 5,5'-[1-methyl-1,1-ethanediylbis(1,4-phenylene)bisoxy]bis(isobenzofuran-1,3-dione) (a compound represented by the formula (4) where A was the linking group 11 as well as $R^1$ to $R^6$ each were a hydrogen atom) was used as the tetracarboxylic dianhydride, and the thickness of the separation functional layer was adjusted to 1.68 $\mu$m. Furthermore, the characteristics of the separation membrane of Example 2 were evaluated by the same method as in Example 1. Table 3 shows the results.

(Comparative Example 1)

A separation membrane of Comparative Example 1 was fabricated in the same manner as in Example 1, except that 4,4'-(hexafluoroisopropylidene)diphthalic anhydride was used as the tetracarboxylic dianhydride. Furthermore, the characteristics of the separation membrane of Comparative Example 1 were evaluated by the same method as in Example 1. Table 3 shows the results.

(Comparative Example 2)

A separation membrane of Comparative Example 2 was fabricated in the same manner as in Comparative Example 1, except that the thickness of the separation functional layer was adjusted to 2.62 $\mu$m. Furthermore, the characteristics of the separation membrane of Comparative Example 2 were evaluated by the same method as in Example 1. Table 3 shows the results.

(Comparative Example 3)

A separation membrane of Comparative Example 3 was fabricated in the same manner as in Example 1, except that 4,4'-methylenebis(2,6-xylidine) (a compound represented by the formula (5) where B was the linking group 3 and $Ar^1$ and $Ar^2$ each were a 2,6-dimethyl-1,4-phenylene group) was used as the diamine compound, and the thickness of the separation functional layer was adjusted to 2.47 $\mu$m. Furthermore, the characteristics of the separation membrane of Comparative Example 3 were evaluated by the same method as in Example 1. Table 3 shows the results.

[Table 3]

| | Tetracarboxylic dianhydride | | | Diamine compound | | | Thickness ($\mu m$) | PV evaluation | | |
|---|---|---|---|---|---|---|---|---|---|---|
| | -A- | SP value $[(cal/cm^3)^{1/2}]$ | The number of atoms constituting shortest bonding chain | -B- | SP value $[(cal/cm^3)^{1/2}]$ | The number of atoms constituting shortest bonding chain | | Separation factor a | Flux of water ($kg/m^2/hr$) | $\alpha$/thickness ($\mu m^{-1}$) |
| Example 1 | 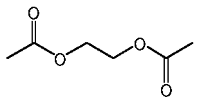 | 12.68 | 6 | -O- | 14.51 | 1 | 1.28 | 199 | 0.132 | 155.4 |
| Example 2 | 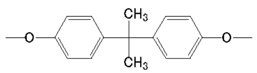 | 11.02 | 11 | -O- | 14.51 | 1 | 1.68 | 42.5 | 0.206 | 25.29 |
| Comparative Example 1 | 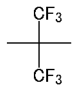 | 5.00 | 1 | -O- | 14.51 | 1 | 1.28 | 3.6 | 1.09 | 2.81 |
| Comparative Example 2 | | | | | | | 2.62 | 2 | 1.162 | 0.76 |
| Comparative Example 3 | 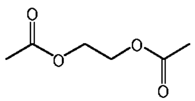 | 12.68 | 6 | $-CH_2-$ | 8.56 | 1 | 2.47 | 13.5 | 0.313 | 5.46 |

As shown in Table 3, the separation membranes of Examples 1 and 2, in which the linking group A had an SP value of more than 5.0 $(cal/cm^3)^{1/2}$ and the linking group B had an SP value of more than 8.56 $(cal/cm^3)^{1/2}$, had a separation factor $\alpha$ and a separation factor $\alpha$ ($\alpha$/thickness) standardized by the thickness of the separation functional layer that were better than those of the separation membranes of Comparative Examples 1 to 3. Furthermore, the separation membranes of Examples 1 and 2 each exhibited a practically sufficient value of the flux of the water.

(Comparative Example 4)

A separation membrane of Comparative Example 4 was fabricated in the same manner as in Example 1, except that: 4,4'-biphthalic anhydride (s-BPDA) was used as the tetracarboxylic dianhydride; a mixture of 3,4'-diaminodiphenyl ether (34DADE), 4,4'-diaminodiphenyl ether (44DADE), and 2,2-bis[4-(4-aminophenoxy)phenyl)]hexafluoropropane (HFBAPP) was used as the diamine compound; and the thickness of the separation functional layer was adjusted to 16 $\mu$m. In the polyimide contained in the separation membrane of Comparative Example 4, a ratio of structural units derived from 34DADE with respect to structural units derived from all the diamine compounds was 30 mol%. A ratio of structural units derived from 44DADE with respect to structural units derived from all the diamine compounds was 30 mol%. A ratio of structural units derived from HFBAPP with respect to structural units derived from all the diamine compounds was 40 mol%. Furthermore, the characteristics of the separation membrane of Comparative Example 4 were evaluated by the same method as in Example 1. Table 4 shows the obtained results.

(Comparative Example 5)

A separation membrane of Comparative Example 5 was fabricated in the same manner as in Comparative Example 4, except that a mixture of 34DADE, 44DADE, and 1,4-bis(4-aminophenoxy)benzene (TPEQ) was used as the diamine compound, and the thickness of the separation functional layer was adjusted to 21.5 $\mu$m. In the polyimide contained in the separation membrane of Comparative Example 5, a ratio of structural units derived from 34DADE with respect to structural units derived from all the diamine compounds was 40 mol%. A ratio of structural units derived from 44DADE with respect to structural units derived from all the diamine compounds was 40 mol%. A ratio of structural units derived from TPEQ with respect to structural units derived from all the diamine compounds was 20 mol%. Furthermore, the characteristics of the separation membrane of Comparative Example 5 were evaluated by the same method as in Example 1. Table 4 shows the obtained results.

(Comparative Example 6)

A separation membrane of Comparative Example 6 was fabricated in the same manner as in Comparative Example 5, except that: the composition of the mixture of 34DADE, 44DADE, and TPEQ was adjusted in such a manner that the ratio of the structural units derived from 34DADE with respect to the structural units derived from all the diamine compounds was 30 mol%, the ratio of the structural units derived from 44DADE with respect to the structural units derived from all the diamine compounds was 10 mol%, and the ratio of the structural units derived from TPEQ with respect to the structural units derived from all the diamine compounds was 60 mol% in the polyimide contained in the obtained separation membrane; and the thickness of the separation functional layer was adjusted to 12.5 $\mu$m. Furthermore, the characteristics of the separation membrane of Comparative Example 6 were evaluated by the same method as in Example 1. Table 4 shows the obtained results.

[Table 4]

| | Tetracarboxylic dianhydride | Diamine compound | | | | | Thickness (μm) | PV evaluation | | |
|---|---|---|---|---|---|---|---|---|---|---|
| | | Compound (Ratio [mol%]) | -B- | SP value of linking group B [(cal/cm$^3$)$^{1/2}$] | Average of SP value of linking group B [(cal/cm$^3$)$^{1/2}$] | The number of atoms constituting shortest bonding chain | | Separation factor a | Flux of water (kg/m$^2$/hr) | α/thickness (μm$^{-1}$) |
| Comparative Example 4 | s-BPDA | 34DADE (30) | -O- | 14.51 | 12.55 | 1 | 16 | 2.2 | 0.029 | 0.138 |
| | | 44DADE (30) | -O- | 14.51 | | 1 | | | | |
| | | HFBAPP (40) | 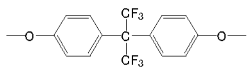 | 9.62 | | 11 | | | | |
| Comparative Example 5 | s-BPDA | 34DADE (40) | -O- | 14.51 | 14.01 | 1 | 21.5 | 94.9 | 0.0051 | 4.41 |
| | | 44DADE (40) | -O- | 14.51 | | 1 | | | | |
| | | TPEQ (20) | 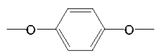 | 12.40 | | 6 | | | | |
| Comparative Example 6 | s-BPDA | 34DADE (30) | -O- | 14.51 | 13.24 | 1 | 12.5 | 13.7 | 0.012 | 1.10 |
| | | 44DADE (10) | -O- | 14.51 | | 1 | | | | |
| | | TPEQ (60) | 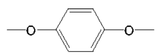 | 12.40 | | 6 | | | | |

s-BPDA:

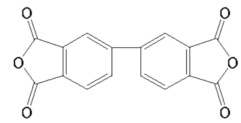

34DADE:

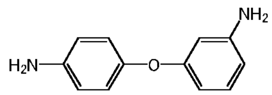

44DADE:

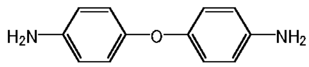

HFBAPP:

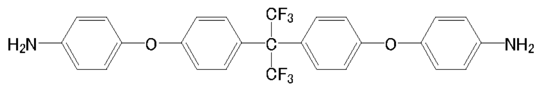

TPEQ:

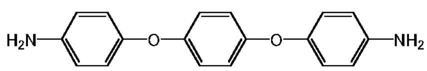

As shown in Table 4, when s-BPDA without the linking group A was used as the tetracarboxylic dianhydride, it was impossible to obtain a separation membrane that has a practically sufficient flux of the water as well as an excellent separation factor $\alpha$ even by adjusting the diamine compound and the thickness of the separation functional layer. For example, the separation membrane of Comparative Example 5 exhibited an extremely low value (0.0051 $kg/m^2/hr$) of the flux of the water while having a relatively high value (94.9) of the separation factor $\alpha$. Furthermore, the separation membranes of Comparative Examples 4 to 6 each exhibited a lower value of the separation factor $\alpha$ ($\alpha$/thickness) standardized by the thickness of the separation functional layer than those of the separation membranes of Examples 1 and 2.

(Example 3)

A separation membrane of Example 3 was fabricated in the same manner as in Example 1, except that a mixture of 4,4'-diaminodiphenyl ether and 3,5-diaminobenzoic acid was used as the diamine compound, and the thickness of the separation functional layer was adjusted to 1.39 $\mu$m. In the polyimide contained in the separation membrane of Example 3, a ratio of structural units derived from 3,5-diaminobenzoic acid with respect to structural units derived from all the diamine compounds was 10 mol%. Furthermore, the characteristics of the separation membrane of Example 3 were evaluated by the same method as in Example 1. Table 5 shows the obtained results.

(Example 4)

A separation membrane of Example 4 was fabricated in the same manner as in Example 3, except that a solution containing polyimide was added to the dispersion containing the hydrophilic porous filler before the separation functional layer was formed, and the thickness of the separation functional layer was adjusted to 1.71 $\mu$m. As the hydrophilic porous filler, molecular sieve 4A (Zeoal4A (with a particle diameter of 300 nm) available from Nakamura Choukou Co., Ltd.) was used. A content of the hydrophilic porous filler in the separation functional layer was 10 wt%. Furthermore, the characteristics of the separation membrane of Example 4 were evaluated by the same method as in

Example 1. Table 5 shows the results.

(Examples 5 to 11)

Separation membranes of Examples 5 to 11 were fabricated in the same manner as in Example 4, except that the hydrophilic porous fillers listed in Table 5 were used, and the thicknesses of the separation functional layers were adjusted to the thicknesses listed in Table 5. Furthermore, the characteristics of the separation membranes of Examples 5 to 11 were evaluated by the same method as in Example 1. Table 5 shows the results.

A ratio R1 of an equilibrium adsorption amount Q2 that the hydrophilic porous filler used in each of Examples 4 to 11 has for water under an equilibrium pressure of 3.2 kPa with respect to an equilibrium adsorption amount Q1 that the hydrophilic porous filler used in each of Examples 4 to 11 has for ethanol under an equilibrium pressure of 7. 4 kPa was calculated by the above-mentioned method. The hydrophilic porous fillers used to determine the equilibrium adsorption amounts Q1 and Q2 had a weight of 0.02 to 0.1 g. The pretreatment of the hydrophilic porous fillers was carried out for 6 hours under a vacuum atmosphere and a heat condition of 150°C. As the vapor adsorption amount measuring apparatus, BELSORP-maxII available from MicrotracBEL Corp. was used. In the measurements of the equilibrium adsorption amounts, the adsorption of the gas (ethanol or water vapor) by each of the hydrophilic porous fillers was judged to have reached a state of equilibrium when a change in a pressure inside the measuring device was 40 Pa or less for 500 seconds.

Furthermore, with regard to the hydrophilic porous fillers used in Examples 4 to 11, a ratio R2 of a BET specific surface area S2 obtained by water-vapor adsorption with respect to a BET specific surface area S1 obtained by nitrogen gas adsorption was also calculated. The BET specific surface area S1 obtained by nitrogen gas adsorption was determined by the following method. The hydrophilic porous fillers were pretreated by being heated to 150°C under a vacuum atmosphere for 6 hours. Next, each of the hydrophilic porous fillers was placed in a surface area measuring apparatus (BELSORP-mini available from MicrotracBEL Corp.). Next, nitrogen gas was introduced into the measuring apparatus at a measurement temperature of 77K (-196°C). An inside of the apparatus was adjusted to have a specific pressure P, and then an amount of the gas adsorbed by each of the hydrophilic porous fillers was measured. The amount of the gas adsorbed by each of the hydrophilic porous fillers at the specific pressure P was measured after 300 seconds had passed since the adjustment of the inside of the measuring apparatus to the pressure P. Next, a relationship between a relative pressure $P/P_0$ ($P_0$: a saturation vapor pressure (101.67 kPa) of $N_2$) and the amount of the gas adsorbed by each of the hydrophilic porous fillers was plotted in a graph to create an adsorption isotherm of nitrogen gas. Next, the specific surface area S1 was determined by a BET method using the data of the adsorption isotherm of nitrogen gas when the relative pressure P/Po was in a range of 0.05 to 0.1. The BET specific surface area S2 obtained by water-vapor adsorption was determined by the following method. First, an adsorption isotherm of water vapor was created based on the data acquired to determine the equilibrium adsorption amount Q2 for water mentioned above. Next, the specific surface area S2 was determined by the BET method using the data of the adsorption isotherm of water vapor when the relative pressure P/Po was in a range of 0.01 to 0.2.

[Table5]

| | Hydrophilic porous filler | | | | | | | Thickness (μm) | PV evaluation | | |
|---|---|---|---|---|---|---|---|---|---|---|---|
| | Filler | Equilibrium adsorption amount Q1 for ethanol ($cm^3/g$) | Equilibrium adsorption amount Q2 for water ($cm^3/g$) | Ratio R1 (Q2/Q1) | BET specific surface area S2 obtained by water-vapor adsorption ($m^2/g$) | BET specific surface area S1 obtained by nitrogen gas adsorption ($m^2/g$) | Ratio R2 (S2/S1) | | Separation factor a | Flux of water ($kg/m^2/hr$) | α/ thickness ($\mu m^{-1}$) |
| Example 3 | - | - | - | - | - | - | - | 1.39 | 66.6 | 0.21 | 47.91 |
| Example 4 | 4A-300 | 154 | 434 | 2.81 | 904 | 39.4 | 23 | 1.71 | 67.5 | 0.46 | 39.47 |
| Example 5 | ZIF-90 | 158.4 | 499 | 3.14 | 16.1 | 1339 | 0.012 | 1.88 | 58.4 | 0.41 | 31.06 |
| Example 6 | UiO-66 | 152 | 544 | 3.59 | 218 | 1447 | 0.151 | 1.57 | 62.9 | 0.25 | 40.06 |
| Example 7 | UiO-66 $-NH_2$ | 151 | 508 | 3.37 | 299 | 950 | 0.315 | 1.57 | 49.7 | 0.49 | 31.66 |
| Example 8 | UiO-66 -OH | 151 | 562 | 3.72 | 165 | 936 | 0.176 | 1.51 | 62.4 | 0.36 | 41.32 |
| Example 9 | MOF-74 (Ni) | 158 | 616 | 3.90 | 868.5 | 965 | 0.9 | 1.24 | 30.6 | 0.57 | 24.68 |
| Example 10 | UiO-66 $-NO_2$ | 105.4 | 304.2 | 2.88 | 152 | 682 | 0.223 | 1.33 | 69.0 | 0.42 | 51.88 |
| Example 11 | UiO-66 -COOH | 99.4 | 326.7 | 3.29 | 252 | 522 | 0.483 | 1.58 | 38.7 | 0.68 | 24.49 |

As shown in Table 5, the separation membranes of Examples 4 to 11 containing the respective hydrophilic porous fillers had a flux of the water greater than that of the separation membrane of Example 3 containing no hydrophilic porous filler. Particularly, the results of Examples 3 and Examples 5 to 11 reveal that, among the metal organic frameworks, ZIF-90 (Example 5), UiO-66-$NH_2$ (Example 7), UiO-66-OH (Example 8), MOF-74 (Ni) (Example 9), UiO-66-$NO_2$ (Example 10), and UiO-66-COOH (Example 11) each were a hydrophilic porous filler suitable for increasing the flux of the water permeating through the separation membrane without reducing considerably the separation factor $\alpha$ of the separation membrane. Furthermore, as for the metal organic framework (in each of Examples 6 to 8, and Examples 10 and 11) having a UiO-66 network, the flux of the water permeating through the separation membrane tended to increase as the ratio R2 in the metal organic framework increased.

INDUSTRIAL APPLICABILITY

The separation membrane of the present embodiment is suitable for separating water from a liquid mixture containing an alcohol and water. Particularly, the separation membrane of the present embodiment is useful for refining bioethanol.

**Claims**

1. A separation membrane for separating water from a liquid mixture containing an alcohol and water,
the separation membrane comprising polyimide, wherein
the polyimide includes a structural unit represented by formula (1) below:

[Chemical Formula 1]

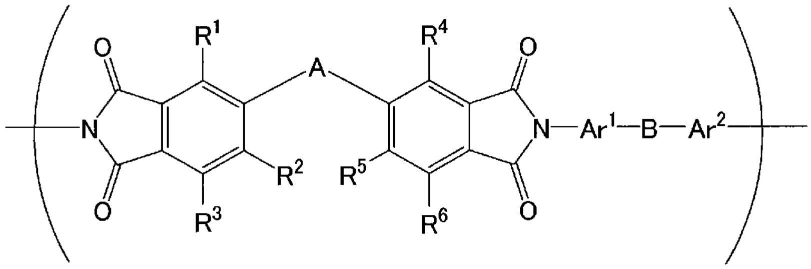

(1)

where A is a linking group having a solubility parameter, in accordance with a Fedors method, of more than 5.0 $(cal/cm^3)^{1/2}$; B is a linking group having a solubility parameter, in accordance with the Fedors method, of more than 8.56 $(cal/cm^3)^{1/2}$; $R^1$ to $R^6$ each are independently a hydrogen atom, a halogen atom, a hydroxyl group, a sulfonic group, an alkoxy group having 1 to 30 carbon atoms, or a hydrocarbon group having 1 to 30 carbon atoms; $Ar^1$ and $Ar^2$ each are a divalent aromatic group; and $Ar^1$ and $Ar^2$ each are represented by formula (2) below when $Ar^1$ and $Ar^2$ each are a phenylene group that may have a substituent;

[Chemical Formula 2]

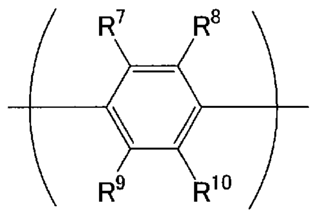

(2)

where $R^7$ to $R^{10}$ each are independently a hydrogen atom, a halogen atom, a hydroxyl group, a sulfonic group, an alkoxy group having 1 to 30 carbon atoms, or a hydrocarbon group having 1 to 30 carbon atoms.

2. The separation membrane according to claim 1, wherein in the formula (1), the number of atoms constituting a

bonding chain, among bonding chains that bond two phthalimide structures linked to each other by A, that is composed of a least number of atoms is 2 or more.

**3.** The separation membrane according to claim 1 or 2, wherein in the formula (1), A includes at least one selected from the group consisting of an ether group and an ester group.

**4.** The separation membrane according to any one of claims 1 to 3, wherein in the formula (1), B includes an ether group.

**5.** The separation membrane according to any one of claims 1 to 4, wherein the structural unit is represented by formula (3) below:

[Chemical Formula 3]

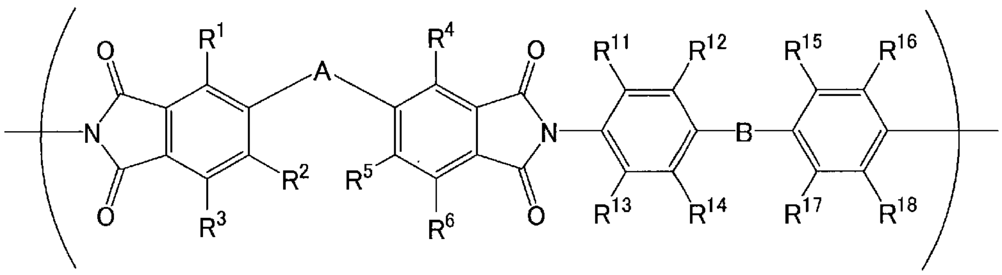

(3)

where A is a linking group having a solubility parameter, in accordance with the Fedors method, of more than 5.0 $(cal/cm^3)^{1/2}$; B is a linking group having a solubility parameter, in accordance with the Fedors method, of more than 8.56 $(cal/cm^3)^{1/2}$; and $R^1$ to $R^6$ and $R^{11}$ to $R^{18}$ each are independently a hydrogen atom, a halogen atom, a hydroxyl group, a sulfonic group, an alkoxy group having 1 to 30 carbon atoms, or a hydrocarbon group having 1 to 30 carbon atoms.

**6.** The separation membrane according to any one of claims 1 to 5, further comprising a hydrophilic porous filler.

**7.** The separation membrane according to claim 6, wherein the hydrophilic porous filler includes a metal organic framework.

**8.** The separation membrane according to any one of claims 1 to 7, wherein
the separation membrane has a separation factor $\alpha$ of 20 or more for water with respect to ethanol,
in a state in which a liquid mixture composed of ethanol and water is in contact with one surface of the separation membrane, the separation factor $\alpha$ is measured by decompressing a space adjacent to an other surface of the separation membrane, and
a concentration of the ethanol in the liquid mixture is 50 vol% when measured with a temperature of the liquid mixture at 20°C, the liquid mixture in contact with the separation membrane has a temperature of 60°C, and the space is decompressed in such a manner that a pressure in the space is lower than an atmospheric pressure in a measurement environment by 100 kPa.

**9.** The separation membrane according to any one of claims 1 to 8, wherein
the separation membrane includes a separation functional layer containing the polyimide, and
the separation functional layer has a thickness of 4 $\mu$m or less.

**10.** A membrane separation method comprising decompressing, in a state in which a liquid mixture containing an alcohol and water is in contact with one surface of the separation membrane according to any one of claims 1 to 9, a space adjacent to an other surface of the separation membrane and thereby obtaining, on a side of the other surface, a permeation fluid having a content of the water higher than a content of the water in the liquid mixture.

**11.** The membrane separation method according to claim 10, wherein a content of the alcohol in the liquid mixture is in a range of 20 wt% to 80 wt%.

**12.** The membrane separation method according to claim 10 or 11, wherein the alcohol is ethanol.

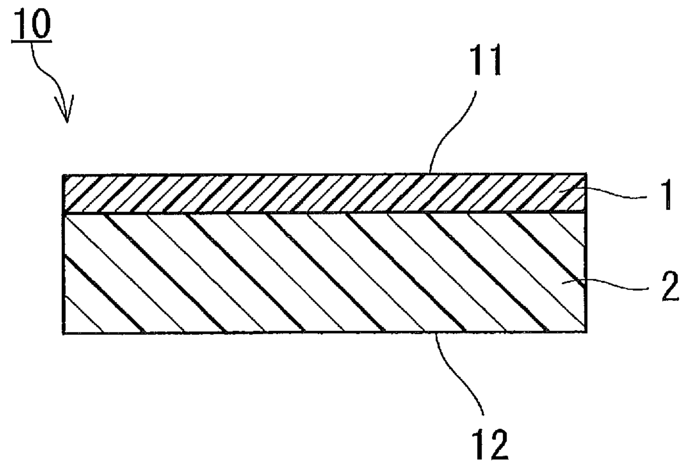


FIG.1

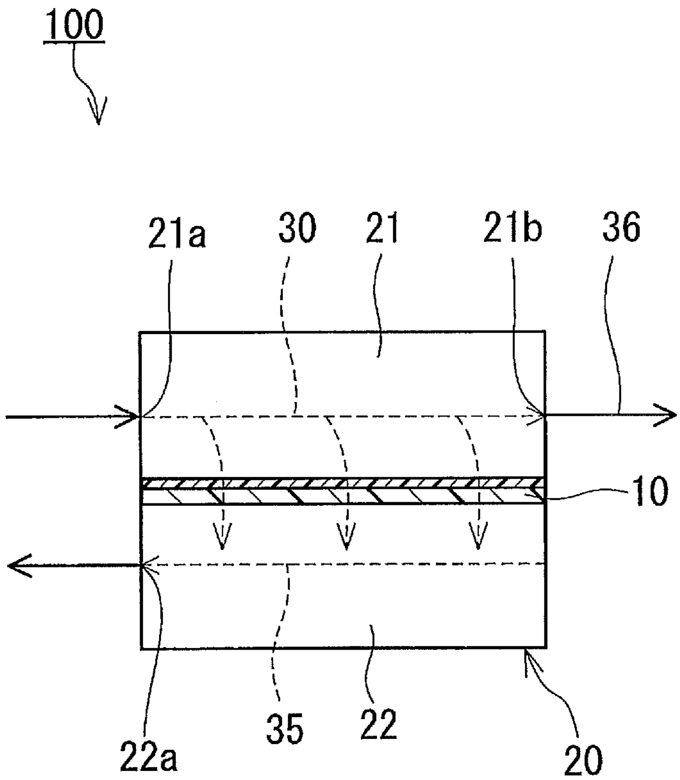


FIG.2

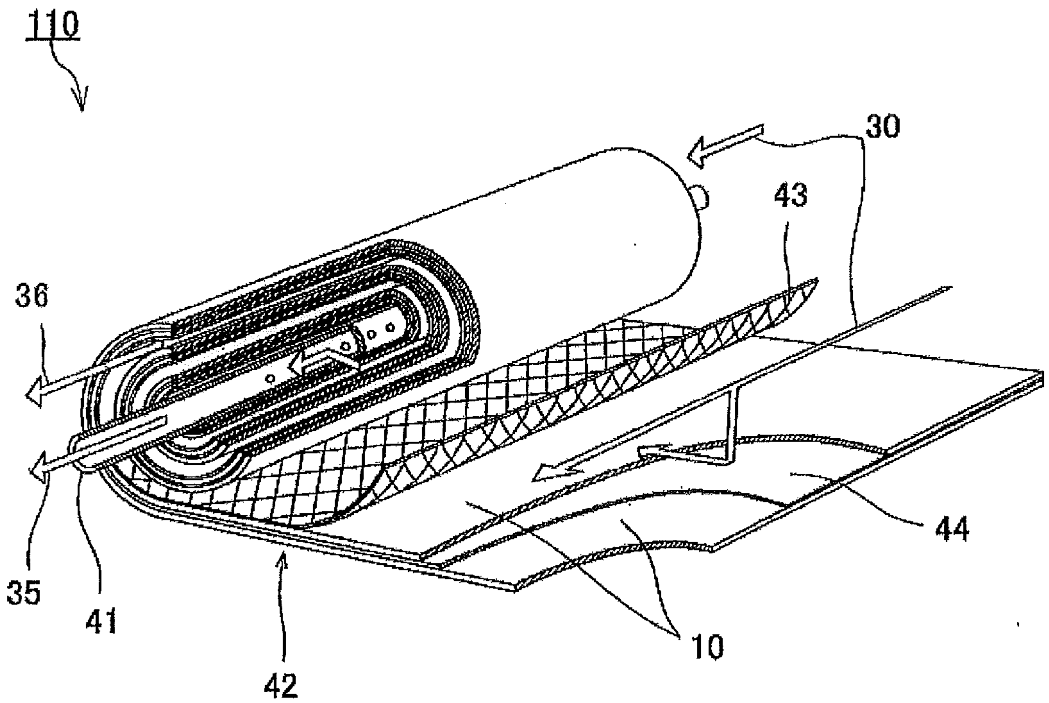


FIG.3

**INTERNATIONAL SEARCH REPORT**

International application No.
PCT/JP2019/037680

A. CLASSIFICATION OF SUBJECT MATTER
Int. Cl. B01D71/64(2006.01)i, B01D61/36(2006.01)i, C08G73/10(2006.01)i

According to International Patent Classification (IPC) or to both national classification and IPC

B. FIELDS SEARCHED

Minimum documentation searched (classification system followed by classification symbols)
Int. Cl. B01D61/00-71/82, B01D53/22, C02F1/44, C08G73/10

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2017-500204 A (SABIC GLOBAL TECHNOLOGIES B.V.) 05 January 2017, claims, paragraphs [0035]-[0040], [0043] & US 2015/0101986 A1, claims, paragraphs [0048]-[0053], [0056] & CN 105636671 A & EP 3057681 A1 & KR 10-2016-0074513 A & WO 2015/057429 A1 | 1-12<br>6-12 |
| X<br>Y | JP 2014-523338 A (UOP LLC) 11 September 2014, claims, paragraphs [0026]-[0035], [0045] & US 2012/0322911 A1, claims, paragraphs [0028]-[0030], [0041] & AU 2012271128 A1 & CA 2836127 A1 & CN 103608094 A & EP 2720782 A2 & KR 10-2013-0137238 A & RU 2013149276 A & WO 2012/173776 A2 | 1-5, 8-12<br>6-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26.11.2019 | 10.12.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/037680

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | US 2015/0090118 A1 (UOP LLC) 02 April 2015, claims, paragraphs [0024]-[0027], [0036] (Family: none) | 1-5, 8-12<br>6-12 |
| A | US 2015/0094500 A1 (UOP LLC) 02 April 2015 & US 2015/0328596 A1 | 1-12 |
| A | JP 2010-521290 A (BOARD OF REGENTS, THE UNIVERSITY OF TEXAS SYSTEM) 24 June 2010 & US 2010/0093879 A1 & AU 2008225124 A1 & CA 2680905 A1 & CN 101652410 A & EP 2118184 A1 & KR 10-2009-0133108 A & WO 2008/112745 A1 | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013528118 A

### Non-patent literature cited in the description

- **ROBERT F. FEDORS.** *Polymer Engineering and Science,* 1974, vol. 14, 147-154